(19) Europäisches Patentamt

European Patent Office

Office européen des brevets

(11) **EP 1 197 419 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **B61L 25/02**, B61K 9/12, G01P 3/64

(21) Anmeldenummer: **01890280.9**

(22) Anmeldetag: **01.10.2001**

(54) **Verfahren und Vorrichtung zur Bestimmung des Raddurchmessers und/oder der Fahrtgeschwindigkeit eines Schienenfährzeuges**

Method and apparatus for determining the wheel diameter and/or the speed of a railway vehicle

Méthode et appareil pour déterminer le diamètre de roue et/ou la vitesse d'un véhicule ferroviaire

(84) Benannte Vertragsstaaten:
**AT BE CH CY DE DK ES FI FR GB GR IE IT LI LU MC NL PT SE TR**

(30) Priorität: **12.10.2000 AT 17482000**

(43) Veröffentlichungstag der Anmeldung:
**17.04.2002 Patentblatt 2002/16**

(73) Patentinhaber: **Siemens SGP Verkehrstechnik GmbH**
**1110 Wien (AT)**

(72) Erfinder:
• **Kitzmüller, Christian**
**8010 Graz (AT)**
• **Stengg, Werner**
**8051 Graz (AT)**

(74) Vertreter: **Matschnig, Franz, Dipl.-Ing.**
**Patentanwalt,**
**Siebensterngasse 54,**
**Postfach 252**
**1071 Wien (AT)**

(56) Entgegenhaltungen:
WO-A-00/60322         DE-A- 19 729 990
US-A- 4 432 229        US-A- 5 433 111

## Beschreibung

Die Erfindung betrifft ein Verfahren zur laufenden Bestimmung der Fahrtgeschwindigkeit eines zur Fortbewegung auf Geleisen mit in Abstand voneinander angeordneten Schwellen oder äquivalenten Befestigungen vorgesehen Schienenfahrzeuges mit in Achslagem gelagerten Rädern.

Weiters betrifft die Erfindung eine Vorrichtung zur laufenden Bestimmung der Fahrtgeschwindigkeit eines zur Fortbewegung auf Geleisen mit in Abstand voneinander angeordneten Schwellen oder äquivalenten Befestigungen vorgesehenen Schienenfahrzeuges mit in Achslagern gelagerten Rädern, wobei an zumindest einem Achslager eines Rades zumindest ein mit einer Auswerteeinheit in Verbindung stehender Beschleunigungssensor vorgesehen ist.

Der genauen Kenntnis des Raddurchmessers kommt bei der Bestimmung der Fahrtgeschwindigkeit eines Schienenfahrzeuges eine besondere Bedeutung zu, da sich aus dem Raddurchmesser und der Winkelgeschwindigkeit des Rades die Fahrtgeschwindigkeit ermitteln lässt.

Üblicherweise wird die Vermessung der Raddurchmesser an dem stehenden Schienenfahrzeug vorgenommen. Dieses Verfahren ist sehr zeitaufwendig und daher auch mit hohen Kosten verbunden. Außerdem können bei dem soeben erwähnten Verfahren keine während einer Fahrt auftretenden Veränderungen des Raddurchmessers erfasst werden, was zu Fehlern in der Berechnung der Fahrtgeschwindigkeit führen kann.

Die CH 630 016 A5 beschreibt eine Vorrichtung zur Messung von Schienenschäden mit einem Messwagen mit zwei Sensoren und einem Beschleunigungsmesser, wobei sich die beiden Sensoren in einem Abstand voneinander befinden, der kleiner als die kleinste zu messende Wellenlänge ist, die von statischen Schienendefekten bestimmt ist. Die beiden Sensoren und der Beschleunigungsmesser sind mit einer Auswerteeinheit verbunden, welche aus von den Sensoren erhaltenen Signalen den Abstand und die Tiefe der Verformungen ermittelt.

Die US 4 100 795 A beschreibt ebenfalls ein Verfahren und ein System zur Messung und Aufzeichnung von Deformationen von Eisenbahnschienen, wobei ein mit einem Beschleunigungsmesser verbundener Fühler entlang des Schienenkopfes geführt wird.

Entsprechend der Bewegung des Fühlers wird von dem Beschleunigungssensor ein Beschleunigungssignal erzeugt, welches in Abhängigkeit von der Geschwindigkeit eines das System tragenden Fahrzeuges verstärkt wird. Anhand des Beschleunigungssignals können Schäden bzw. Welligkeiten der Schienen erkannt werden.

Die US 5 433 111 A beschreibt eine Vorrichtung und ein Verfahren zur Erkennung von Radschäden eines Schienenfahrzeuges. Die bekannte Vorrichtung weist eine Messeinheit zur Ermittlung der Achsrotation eines Radsatzes und einen Bewegungssensor, beispielsweise einen Beschleunigungssensor, zur Erfassung von Bewegungen vertikal zur Schienenebene. Bei schadhaften Gleisen wird pro Beschleunigungssensor ein entsprechendes Signal erzeugt. Tritt ein Radschaden auf, so wird mit der Periode der Achsrotation ein Beschleunigungssignal in vertikaler Richtung erzeugt, welches einen Rückschluss darauf zulässt, ob ein Radschaden vorliegt.

Die US 5 924 654 offenbart eine Vorrichtung zur Erfassung der Bewegungen eines Schienenfahrzeuges, wobei auf der Innenseite eines Schienenfahrzeugsrahmens ein Sensor angeordnet ist, der zur Erfassung der Bewegungen des Schienenfahrzeuges eingerichtet ist. In einer mit dem Sensor verbundenen Auswerteeinheit können anhand von dem Sensor übermittelten Signalen Schäden an dem Schienenfahrzeug erkannt werden.

Die am Prioritätsdatum der Anmeldung veröffentlichte WO 00/60322 zeigt die Berechnung der Fahrtgeschwindigkeit aus dem Verlauf eines periodischen, von Schäden an der Lauffläche eines Rades eines Schienenfahrzeuges verursachten Beschleunigungssignals und dem Radradius. Nachteilig an der bekannten Methode ist vor allem, dass bei einer betriebsbedingten Änderung des Raddurchmessers die Fahrtgeschwindigkeit falsch ermittelt wird.

Letztendlich zeigt die DE 19729 990 ein Verfahren und eine Vorrichtung zur Bestimmung der Geschwindigkeit, durch Regiestrierung der Schwellen-befestigungen.

Es ist eine Aufgabe der Erfindung, einen Weg zu schaffen, der es ermöglicht, zum einen auch bei betriebsbedingten Änderungen des Raddurchmessers die Fahrtgeschwindigkeit genau zu ermitteln und zum anderen den Durchmesser eines Rades eines Schienenfahrzeuges auch während einer Fahrt zu bestimmen.

Diese Aufgabe wird mit einem Verfahren der eingangs genannten Art erfindungsgemäß dadurch gelöst, dass an zumindest einem Achslager zumindest ein den Schwellen zugeordnetes Beschleunigungssignal erzeugt und aus diesem sowie aus dem Abstand der Schwellen die Fahrtgeschwindigkeit errechnet wird.

Es ist ein Verdienst der Erfindung eine genaue Berechnung der Fahrtgeschwindigkeit unabhängig von dem aktuellen Raddurchmesser zu ermöglichen.

Eine bevorzugte Variante der Erfindung sieht vor, dass an zumindest zwei in Fahrtrichtung hintereinanderliegenden Achslagerungen je zumindest ein Beschleunigungssignal erzeugt wird.

Günstigerweise wird zur Berechnung der Fahrtgeschwindigkeit eine für die befahrene Strecke charakteristische Schwellenfachschwingung bzw. Schwellenfachfrequenz ermittelt.

Vorteilhafterweise werden Signalwerte des zumindest einen Beschleunigungssignals, die innerhalb eines vorgebbaren Zeitintervalls liegen, einer Fouriertransformation unterworfen werden, und aus der Fouriertransformierten der Signalwerte des Beschleunigungssignals die für eine befahrene Strecke charakteristische Schwellenfachschwingung bzw. Schwellenfachfrequenz ermittelt wird, die zumindest einem in Bezug auf die Fahrtrichtung vorderen und/oder hinteren Rad zugeordnet ist.

Ist der exakte Schwellenabstand unbekannt, so besteht eine vorteilhafte Ausführungsform der Erfindung darin, dass die Phasenlage der Schwellenfachschwingung ermittelt und die Phasendifferenz der einem vorderen und einem hinteren Rad zugeordneten Schwellenfachschwingung gebildet wird. In weiterer Folge wird aus der Phasendifferenz der Schwellenfachschwingung der Schwellenabstand berechnet und aus dem Schwellenabstand und der Schwellenfachfrequenz die Fahrgeschwindigkeit ermittelt. Hierauf wird der Durchmesser des Rades aus der Drehfrequenz der Achse und der Fahrgeschwindigkeit des Schienenfahrzeuges ermittelt.

Zur Realisierung des erfindungsgemäßen Verfahrens eignet sich im besonderen eine Vorrichtung der eingangs genannten Art, bei welcher die Auswerteeinheit dazu eingerichtet ist, aus dem Abstand der Schwellen und einem von dem Beschleunigungssensor erzeugten, den Schwellen zugeordnetem Beschleunigungssignal die Fahrtgeschwindigkeit zu berechnen.

In einer bevorzugten Ausführungsform der Erfindung ist an zumindest zwei in Fahrtrichtung hintereinanderliegenden Achslagern je zumindest ein Beschleunigungssensor vorgesehen.

Günstigerweise ist die Auswerteeinheit dazu eingerichtet, zur Berechnung der Fahrtgeschwindigkeit eine für die befahrene Strecke charakteristische Schwellenfachschwingung bzw. Schwellenfachfrequenz zu ermitteln.

Vorteilhafterweise ist die Auswerteeinheit dazu eingerichtet, eine Fouriertransformation von Signalwerten des zumindest einen Beschleunigungssignals durchzuführen, die innerhalb eines vorgebbaren Zeitintervalls liegen und aus der Fouriertransformierten eine für eine befahrene Strecke charakteristische Schwellenfachschwingung bzw. Schwellenfachfrequenz zu ermitteln, die zumindest einem in Bezug auf die Fahrtrichtung vorderen und/oder hinteren Rad zugeordnet ist.

Günstigerweise ist die Auswerteeinheit dazu eingerichtet, die Phasenlage der Schwellenfachschwingung zu ermitteln, und aus der Phasendifferenz der Schwellenfachschwingung den Schwellenabstand zu berechnen.

Weiters kann die Auswerteinheit dazu eingerichtet sein, aus dem Schwellenabstand und der Schwellenfachfrequenz die Fahrgeschwindigkeit zu ermitteln, sowie den Durchmesser des Rades aus der Drehfrequenz der Achse und der Fahrtgeschwindigkeit des Schienenfahrzeuges zu berechnen.

Die Erfindung samt weiteren Vorteilen wird im folgenden anhand einiger nicht einschränkender Ausführungsbeispiele näher erläutert, die in der Zeichnung veranschaulicht sind. In dieser zeigen schematisch

Fig. 1 ein Drehgestell eines Schienenfahrzeuges in Seitenansicht mit einer Anordnung von Beschleunigungssensoren gemäß der Erfindung zur Ermittlung der Raddurchmesser und/oder der Fahrtgeschwindigkeit des Schienenfahrzeuges in seitlicher Ansicht,

Fig. 2 einen Ausschnitt aus einem Phasenspektrum zweier Beschleunigungssignale,

Fig. 3 das Drehgestell aus Fig. 1 in Draufsicht,

Fig. 4 einen Ausschnitt aus einem Amplitudenspektrum zweier Beschleunigungssignals und

Fig. 5 ein vereinfachtes Blockschaltbild einer erfindungsgemäßen Vorrichtung.

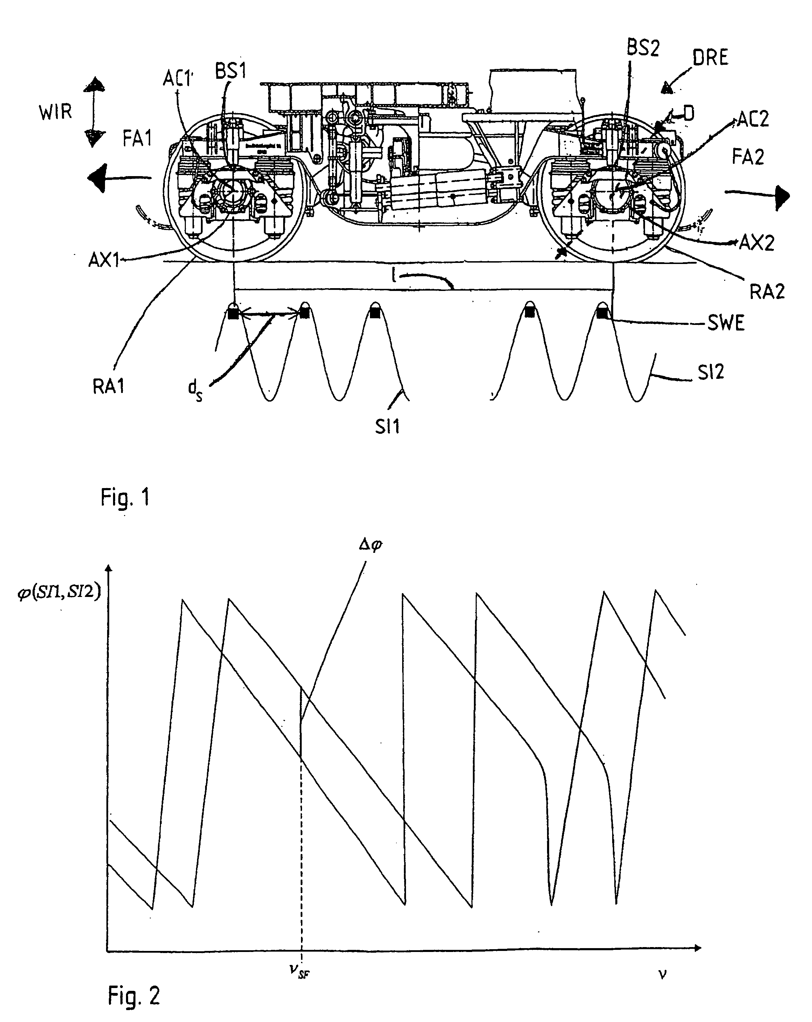

Gemäß Fig. 1 sind für eine erfindungsgemäße Vorrichtung zur Bestimmung des Durchmessers eines Rades RA1, RA2 eines Schienenfahrzeuges zwei Beschleunigungssensoren BS1, BS2 vorgesehen, die in Fahrtrichtung FA1, FA2 des Drehgestells DRE des Schienenfahrzeuges hintereinanderliegend je im Bereich eines Achslagers angeordnet sind. Die möglichen Fahrtrichtungen FA1, FA2 des Schienenfahrzeuges sind durch Pfeile angedeutet.

Beim Überfahren von Schwellen SWE werden aufgrund der Steifigkeitsvariation der Geleise - im Bereich einer Schwelle SWE ist die Steifigkeit gegenüber einem zwischen zwei Schwellen SWE gelegenen Gleisabschnitt erhöht - Schwingungen in dem Drehgestell DRE induziert. Diese Schwingungen sind in Form charakteristischer Beschleunigungsschwankungen im Bereich der Achslagerung AX1, AX2 messbar, wobei ein ausgewählter Schwingungsanteil, die sogenannte Schwellenfachschwingung, Rückschlüsse auf den Schwellenabstand $d_s$ bzw. die Fahrtgeschwindigkeit des Schienenfahrzeuges zulässt.

Der Schwellenabstand $d_s$ zwischen zwei Schwellen SWE entspricht dabei im wesentlichen der Wellenlänge der Schwellenfachschwingung.

Ein wesentliches Element der vorliegenden Erfindung ist die Erkenntnis, dass besonders repräsentative Messergebnisse erzielt werden können, wenn die Wirkungsrichtung der Beschleunigungssensoren BSE im wesentlichen normal zur Schienenebene ε oder parallel zur Fahrtrichtung des Schienenfahrzeuges verläuft. In der Zeichnung ist die Fahrtrichtung FAR bzw. die Wirkungsrichtung der Beschleunigungssensoren BSE mit einem Pfeil dargestellt.

Unter Wirkungsrichtwng eines Beschleunigungssensors BSE wird in diesem Dokument die Richtung verstanden, in welcher der Sensor Beschleunigungskräfte aufnehmen und Signale liefern kann.

Die Beschleunigungssensoren BSE können beispielsweise als piezoelektrische Sensoren ausgebildet sein, bei welchen in bekannter Weise ein piezoelektrischer Kristall zwischen zwei parallel zueinander verlaufenden Kondensatorplatten angeordnet ist. Findet diese Art von Sensoren Verwendung so kann man dadurch, dass die beiden Kondensatorplatten im wesentlichen parallel zur Fahrtrichtung des Schienenfahrzeuges verlaufen, eine normal zu der Fahrtrichtung FA1, FA2 verlaufende Wirkungsrichtung WIR der Beschleunigungssensoren BSE erreichen. Selbstverständlich können auch andere bekannte Beschleunigungssensoren, die auf anderen Mechanismen beruhen, verwendet werden.

Aus der Schwellenfachfrequenz kann bei bekanntem Schwellenabstand $d_S$ die Relativgeschwindigkeit des Rades RA1, RA2 entlang der Schiene bzw. der Fahrgeschwindigkeit des Schienenfahrzeuges nach folgender Formel bestimmt werden:

$$V = \nu_{SF} * d_S,$$

wobei V die Fahrtgeschwindigkeit des Schienenfahrzeuges und $\nu_{SF}$ die Schwellenfachfrequenz bezeichnen. Für eine exakte Bestimmung der Fahrtgeschwindigkeit V ist eine genaue Kenntnis des

Schwellenabstandes notwendig. Da unterschiedliche Normen existieren, kann diese Größe nicht immer als Konstante angesehen werden, weshalb eine messtechnische Erfassung des Schwellenabstandes erforderlich sein kann. Das hier vorgeschlagene Verfahren macht sich zu diesem Zweck die Phasenverschiebung

der Schwingung an zwei längs der Schiene versetzten Radsätzen zunutze, deren geometrischer Abstand 1 exakt bekannt ist. Nach Fig. 2 sind die Phasen φ der Beschleunigungssignale SI1, SI2 zueinander verschoben.

Die Ursache für die Phasenverschiebung Δφ kann darin gesehen werden, dass der Abstand 1 der Auflageflächen der Räder RA1, RA2 auf den Schienen üblicherweise nicht exakt mit einem ganzzahligen Vielfachen des Schwellenabstandes $d_S$ übereinstimmt. Bei Fahrtrichtung FA1 nach links in Fig. 1 weist das zweite Beschleunigungssignal SI2 gegenüber dem ersten Beschleunigungssignal SI1 eine nachlaufende Phasenlage auf. Bei entgegengesetzter Fahrtrichtung FA2 kehrt sich das Vorzeichen um, was jedoch ebenfalls bei einer entsprechenden Verlängerung bzw. Verkürzung des Schwellenabstandes $d_S$ eintritt. Um diese Effekte voneinander unterscheiden zu können, muss die Fahrtrichtung FA1, FA2 bekannt sein, beispielsweise durch Bildung der Kreuzkorrelationsfunktion der beiden Beschleunigungssignale SI1, SI2, sonst ist es notwendig, die Existenz gewisser Schwellenabstände $d_S$ auszuschließen.

Zur Bestimmung der Phasendifferenz Δφ ist es wichtig, dass die Phasenlage φ dem Phasenspektrum bei derselben Frequenz ν - der Schwellenfachfrequenz $\nu_{SF}$ - entnommen wird. Theoretisch sind die beiden Beschleunigungssignale SI1, SI2 in Bezug auf die Schwellenfachschwingung identisch und phasenverschoben.

Um die Schwellenfachfrequenz $\nu_{SF}$ in dem Phasenspektrum zu ermitteln, wird die Schwellenfachfrequenz $\nu_{SF}$ für jedes Beschleunigungssignal SI1, SI2 aus dem Amplitudenspektrum ermittelt und das arithmetische Mittel dieser beiden Werte gebildet. Dieser Mittelwert wird dann in dem Phasenspektrum als Schwellenfachfrequenz $\nu_{SF}$ identifiziert und bei dieser Frequenz die Phasendifferenz Δφ der Phasenlage φ (SI1, SI2) der beiden Schwellenfachschwingungen gebildet.

Da die Phasen zwischen -180° und + 180° verlaufen, ist die Anzahl der vollständigen Perioden der Schwellenfachschwingung im Bereich zwischen den beiden Rädern RA1, RA2 unbekannt. Diese Information muss deshalb vorausgesetzt werden.

Unter der Annahme einer bekannten Anzahl von vollständigen Perioden N lässt sich der Schwellenabstand $d_S$ bei bekanntem Abstand 1 der Achsen AC1 und AC2 durch folgende Formel berechnen:

$$d_S = \frac{l[m]}{N + \frac{\Delta\varphi[rad]}{2\pi}}.$$

Eine Zuordnung verschiedener Werte von vollständigen Perioden N zu einigen Schwellenabständen $d_S$ kann bei einem Abstand 1 der Achsen AC1 und AC2 von beispielsweise 2,5 m wie unten angeführt erfolgen:

| $d_S$ /cm | N |
|---|---|
| 41,7 - 50,0 | 5 |
| 50,0 - 62,5 | 4 |
| 62,5 - 83,3 | 3 |

Es ist also notwendig den Bereich in dem der Schwellenabstand $d_S$ einer vorgegebenen Strecke liegt zu kennen, um den exakten Schwellenabstand $d_S$ dieser Strecke zu berechnen.

Variiert der Schwellenabstand $d_S$ zwischen mehreren Bereichen, kann anhand der Phasendifferenz auf den korrekten Wert von vollständigen Perioden N und somit auf den Schwellenabstand $d_S$ geschlossen werden.

Wie bereits oben erwähnt ist es notwendig, um das korrekte Vorzeichen der Phasendifferenz zu erhalten die Fahrtrichtung des Schienenfahrzeuges zu kennen. Dieser Sachverhalt geht auch unmittelbar aus der verwendeten Formel zur Berechnung der Phasendifferenz Δφ hervor:

$$\Delta\varphi = \varphi_{vor} - \varphi_{nach}.$$

Im Fall der Fahrtrichtung FA1 entspricht in der soeben angeführten Formel $\varphi_{vor}$ der Phasenlage der aus dem Beschleunigungssignal SI1, welches von dem in Fahrtrichtung FA1 vor dem anderen Beschleunigungssensor BSE gelegenen Beschleunigungssensor BS1 stammt, berechneten Schwellenfachschwingung und $\varphi_{nach}$ der Phasenlage der Schwellenfachschwingung, die dem Beschleunigungssignals SI2 zugeordnet ist, welches von dem anderen Beschleunigungssensor BS2 aufgenommen wird.

Vorraussetzung für eine eindeutige Zuordnung der beiden Vorzeichenbereiche ist, wie bereits oben erwähnt, die Kenntnis der Fahrtrichtung FA1, FA2. Ist diese Information nicht verfügbar, kann man dennoch durch eine Beschränkung auf vorgebbare Werte der Schwellenabstände $d_S$ eine eindeutige Entscheidung aufgrund des Absolutbetrages der Phasendifferenz der Schwellenfachschwingung treffen.

Es hat sich gezeigt, dass aufgrund der Empfindlichkeit der Methode auch Verdrehungen des Drehgestells DRE gegenüber den Schienen - was einer Verkürzung des Abstandes 1 der Achsen AC1, AC2 entspricht - die Phasendifferenz $\Delta\varphi$ merklich beeinflussen. Da die Verlegung der Schwellen im Mittel sehr exakt erfolgt, hat die Verkürzung des Abstandes 1 bei einem konstanten Schwellenabstand $d_S$ einen größeren Einfluss auf die Beschleunigungssignale SI1, SI2 als Schwankungen des Schwellenabstandes $d_S$. Aus diesem Grund wird die oben beschriebene Methode nur zur Erkennung der jeweiligen Verlegenorm angewendet, für die weiteren Berechnungen wird dann der ermittelte Normabstand verwendet.

Die Position der Schwellenfachfrequenz im Frequenzspektrum geht sowohl direkt als auch indirekt in die bereits oben erwähnte Formel

$$V = \nu_{SF} * d_S$$

zur Bestimmung der Fahrtgeschwindigkeit V des Schienenfahrzeuges über die Bestimmung des Schwellenabstandes $d_S$ ein und muss daher möglichst exakt bestimmt werden.

Als Maß für den in Frage kommenden Frequenzbereich wird die Drehfrequenz $\nu_{WELLE}$ der Achse AC1, AC2 herangezogen, wobei die noch unbekannte Größe des Raddurchmessers D berücksichtigt werden muss.

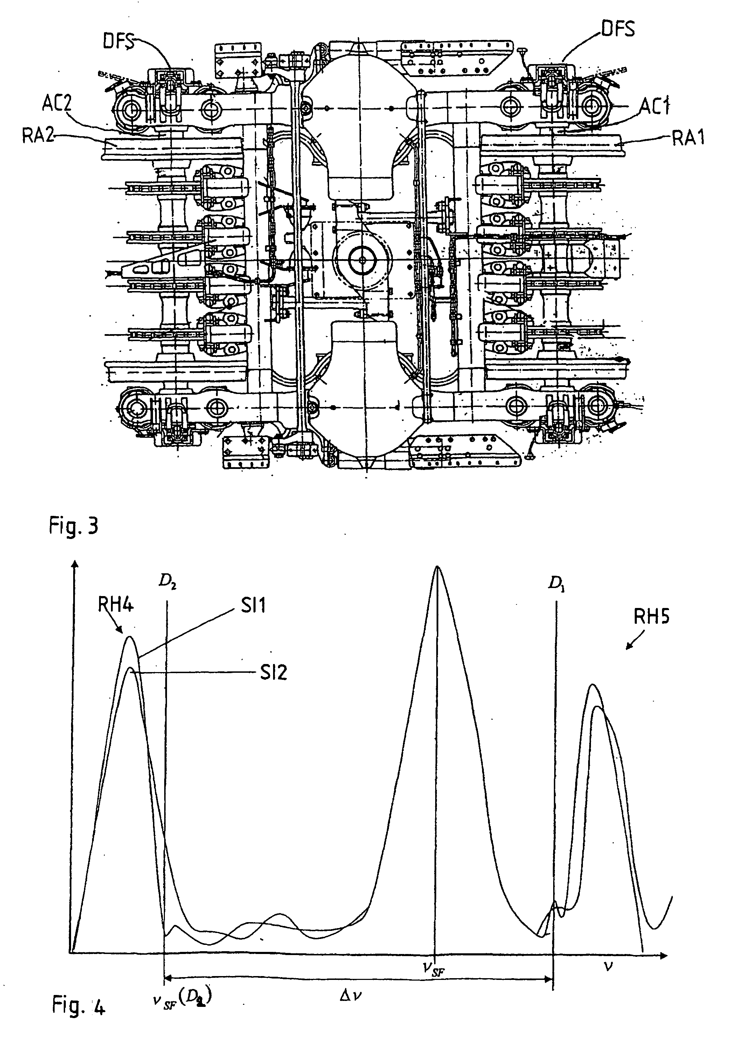

Nach Fig. 3 kann die Drehfrequenz der Achse AC1, AC2 durch einen Drehfrequenzsensor DFS, beispielsweise ein an der Achse AC1, AC2 angeordneter, bekannterweise für diesen Zweck verwendeter, elektromagnetischer Drehfrequenzsensor DFS, ermittelt werden.

Unter der Annahme eines gleitfreien Abrollens kann die Fahrgeschwindigkeit V sowohl über die Schwellenfachfrequenz $\nu_{SF}$ als auch über die Drehfrequenz $\nu_{WELLE}$ der Achse AC1, AC2 bestimmt werden:

$$V = \nu_{SF} * d_S$$

$$V = \nu_{welle} * D * \pi.$$

Durch Gleichsetzen der beiden Geschwindigkeitsausdrücke kann der Zusammenhang zwischen der Schwellenfachfrequenz $\nu_{SF}$ und der Drehfrequenz $\nu_{WELLE}$ der Achse AC1, AC2 ermittelt werden:

$$\nu_{SF} = \frac{D * \pi * \nu_{Welle}}{d_S},$$

vereinfacht lässt sich dies in der Form

$$\nu_{SF} = \alpha * \nu_{welle}$$

schreiben, wobei

$$\alpha = \frac{D * \pi}{d_S}$$

gesetzt wurde.

Im Falle eines ICE-2 Zuges verläuft der tolerierbare Bereich des Raddurchmessers D von 860 bis 920 mm, woraus sich beispielsweise folgende Proportionalitätsfaktoren $\alpha$ für den Zusammenhang zwischen der Schwellenfachfrequenz und der Drehfrequenz der Radachse in Abhängigkeit von dem Raddurchmesser D und dem Schwellenabstand $d_S$ ergeben:

| $d_S$ /cm | D/cm | $\alpha$ |
|---|---|---|
| 60 | 86 | 4,5 |
| 60 | 92 | 4,82 |
| 65 | 86 | 4,16 |
| 65 | 92 | 4,45 |

Nach Fig. 4 liegt im Fall des obigen Beispiels die Schwellenfachfrequenz $\nu_{SF}$ im Spektrum zwischen der vierten und fünften Radunrundheitsharmonischen RH4, RH5 und kann ungestört von diesen bestimmt werden. Unter Radunrundheitsharmonischen werden in diesem Dokument erzwungene periodische Schwingungen verstanden, die durch Abweichungen des Radquerschnittes von der Kreisform hervorgerufen werden. Die Grundharmonische der Radunrundheitsharmonischen RH1 liegt exakt bei der Drehfrequenz der Achse AC1, AC2.

Unter dem Begriff Harmonische werden in diesem Dokument Spektrallinien verstanden, deren Frequenzen zueinander ein ganzzahliges Verhältnis aufweisen. Dies tritt insbesondere bei der Fouriertransformation von periodischen, nicht sinusförmigen Signalen auf. Die Grundharmonische ist dabei die Harmonische mit der niedrigsten Frequenz, welche dem Kehrwert der Periodendauer eines solchen Signals entspricht. Bei ihr beginnt die Nummerierung mit 1. Alle höherfrequenten Harmonischen ("Oberschwingungen") werden in diesem Dokument entsprechend ihrem Frequenzverhältnis zur Grundharmonischen nummeriert, d. h. die erste Oberschwingung ist die zweite Harmonische.

Ausgehend von den zu erwartenden Schwellenabständen in Kombination mit den tolerierbaren Raddurchmessem kann anhand der Formeln

$$\nu_{SF}(D) = \frac{D * \pi * \nu_{Welle}}{d_S},$$

und

$$\Delta\nu = \Delta D \frac{\pi * \nu_{Welle}}{d_S}$$

mit

$$\Delta D = D_1 - D_2,$$

wobei $D_1$ der oberen Grenze und $D_2$ der unteren Grenze des tolerierbaren Raddurchmessers entsprechen, der Frequenzbereich $\nu_{SF}(D_2)\,\Delta\nu$ für die Suche der Schwellenfachfrequenz $\nu_{SF}$ bestimmt werden. Hierbei werden ganzzahlige Vielfache der Drehfrequenz $\nu_{WELLE}$ der Achse AC1, AC2 samt einen Sicherheitsabstand ausgenommen, um eine Verwechslung mit Radunrundheitsharmonischen RH4, RH5 auszuschließen.

Innerhalb des soeben bestimmten Frequenzbereichs $\nu_{SF}(D_2)\Delta\nu$ wird beispielsweise das Maximum bestimmt, wobei gewisse Anforderungen an den Absolutwert der Amplitude oder an das Verhältnis der Amplitude zum Rauschpegel gestellt werden können, um eine eindeutige Erkennung zu gewährleisten.

Grundlage für die Bestimmung des Raddurchmessers D ist die Identität der aus der Schwellenfachfrequenz $\nu_{SF}$ ermittelten Fahrtgeschwindigkeit V und der aus der Drehfrequenz $\nu_{WELLE}$ bestimmten Fahrtgeschwindigkeit unter der Annahme einer reinen Rollbewegung. Der Raddurchmesser D kann nach der Ermittlung der exakten Schwellenfachfrequenz $\nu_{SF}$ mit folgender Formel berechnet werden:

$$D = \frac{d_{S} * \nu_{SF}}{\pi * \nu_{Welle}}$$

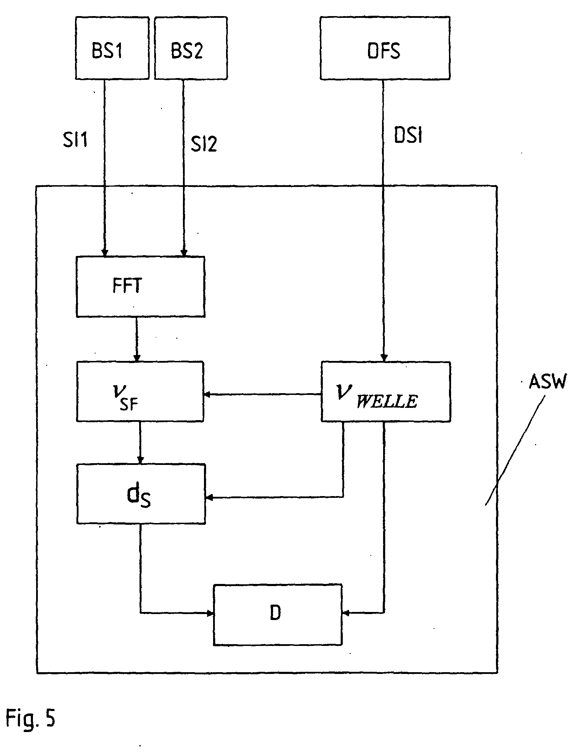

Gemäß Fig. 5 werden die von dem Beschleunigungssensor BSE aufgenommenen Beschleunigungssignale SI1, SI2 und die von dem Drehfrequenzsensor DFS aufgenommenen Drehfrequenzsignale DSI an eine Auswerteeinheit ASW übermittelt. Die Übertragung der Signale von den Beschleunigungssensoren BSE und dem Drehfrequenzsensor DFS an die Auswerteeinheit ASW kann mittels Draht oder drahtlos erfolgen.

In der Auswerteeinheit werden Signalwerte der Beschleunigungssignale SI1, SI2 die in einem vorgebbaren Zeitintervall liegen, beispielsweise 2,5 s, einer Fouriertransformation FFT unterworfen.

Schaltungen und Verfahren zur Durchführung einer Fouriertransformation, insbesondere einer Fast Fouriertransformation sind bekannt und beispielsweise in der EP 402 145 und in "Sprachverarbeitung" von B. Eppinger und E. Herter; Hanser Verlag München Wien 1993 S. 68-71 beschrieben.

Aus jeder Fouriertransformierten wird hierauf die Schwellenfachfrequenz $\nu_{SF}$ und die Phasenlage $\varphi$ der Schwellenfachschwingung ermittelt.

Ist der Schwellenabstand $d_s$ nicht von vorneherein bekannt, so wird die Phasendifferenz $\Delta\varphi$ der einem vorderen und einem hinteren Rad zugeordneten Schwellenfachschwingung gebildet.

Aus der Phasendifferenz $\Delta\varphi$ der Beschleunigungssignale SI1, SI2 wird der Schwellenabstand $d_s$ nach oben beschriebener Methode berechnet.

Aus der Schwellenfachfrequenz $\nu_{SF}$ erfolgt sodann die Berechnung des Raddurchmessers D gemäß dem oben beschriebenen Verfahren. Die aktuelle Fahrtgeschwindigkeit des Schienenfahrzeuges kann aus der Schwellenfachfrequenz $\nu_{SF}$ und dem Schwellenabstand berechnet werden.

Falls augenblicklich keine Schwellenfachschwingung verfügbar ist, so kann die momentane Fahrtgeschwindigkeit auch aus dem zuvor berechneten Raddurchmesser D und aus dem Drehfrequenzsignal berechnet werden.

Das oben beschriebene Verfahren kann selbstverständlich unter Verwendung bekannter, entsprechend programmierter Mikroprozessoren online durchgeführt werden. Dem Fachmann sind darüber hinaus zahlreiche Programme bzw. Programmiersprachen bekannt, die sich zur Realisierung des erfindungsgemäßen Verfahrens eignen, beispielsweise Mathematica, Matlab etc.

**Patentansprüche**

1. Verfahren zur laufenden Bestimmung der Fahrtgeschwindigkeit (V) eines zur Fortbewegung auf Geleisen mit in Abstand ($d_s$) voneinander angeordneten Schwellen (SWE) oder äquivalenten Befestigungen vorgesehen Schienenfahrzeuges mit in Achslagern (AX1, AX2) gelagerten Rädern (RA1, RA2), **dadurch gekennzeichnet, dass** an zumindest einem Achslager (AX1, AX2) zumindest ein den Schwellen (SWE) zugeordnetes Beschleunigungssignal (SI1, SI2) erzeugt und aus diesem sowie aus dem Abstand ($d_s$) der Schwellen (SWE) die Fahrtgeschwindigkeit errechnet wird.

2. Verfahren nach Anspruch 1, **dadurch gekennzeichnet, dass** an zumindest zwei in Fahrtrichtung hintereinanderliegenden Achslagerungen (AX1, AX2) je zumindest ein Beschleunigungssignal (SI1, SI2) erzeugt wird.

3. Verfahren nach Anspruch 1 oder 2, **dadurch gekennzeichnet, dass** zur Berechnung der Fahrtgeschwindigkeit (V) eine für die befahrene Strecke charakteristische Schwellenfachschwingung bzw. Schwellenfachfrequenz ($\nu_{SF}$) ermittelt wird.

4. Verfahren nach Anspruch 3, **dadurch gekennzeichnet, dass** Signalwerte des zumindest einen Beschleunigungssignals (SI1, SI2), die innerhalb eines vorgebbaren Zeitintervalls liegen, einer Fouriertransformation unterworfen werden, und aus der Fouriertransformierten der Signalwerte des Beschleunigungssignals (SI1, SI2) die für eine befahrene Strecke charakteristische Schwellenfachschwingung bzw. Schwellenfachfrequenz ($\nu_{SF}$) ermittelt wird, die zumindest einem in Bezug auf die Fahrtrichtung vorderen und/oder hinteren Rad (RA1, RA2) zugeordnet ist.

5. Verfahren nach Anspruch 4, **dadurch gekennzeichnet, dass** die Phasenlage ($\varphi$) der Schwellenfachschwingung ermittelt wird und die Phasendifferenz ($\Delta\varphi$) der einem vorderen und einem hinteren Rad zugeordneten Schwellenfachschwingung gebildet wird.

6. Verfahren nach Anspruch 5, **dadurch gekennzeichnet, dass** aus der Phasendifferenz ($\Delta\varphi$) der Schwellenfachschwingung der Schwellenabstand ($d_s$) berechnet und aus dem Schwellenabstand ($d_s$) und der Schwellenfachfrequenz ($\nu_{SF}$) die Fahrgeschwindigkeit (V) ermittelt wird.

7. Verfahren zur laufenden Bestimmung des Durchmessers zumindest eines mit seiner Achse (AC1, AC2) in einer Achslagerung (AX1, AX2) gelagerten Rades (RA1, RA2) eines Schienenfahrzeuges, welches zur Fortbewegung auf Geleisen mit in Abstand ($d_s$) voneinander angeordneten Schwellen (SWE) oder äquivalenten Befestigungen vorgesehen ist, **dadurch gekennzeichnet, dass** der Durchmesser anhand einer gemäß nach einem der Ansprüche 1 bis 6 berechneten Fahrtgeschwindigkeit des Schienenfahrzeuges und der Drehfrequenz ($\nu_{WELLE}$) der Achse (AC1, AC2) des Rades (RA1, RA2) berechnet wird.

8. Vorrichtung zur laufenden Bestimmung der Fahrtgeschwindigkeit (V) eines zur Fortbewegung auf Geleisen mit in Abstand ($d_s$) voneinander angeordneten Schwellen (SWE) oder äquivalenten Befestigungen vorgesehenen Schienenfahrzeuges mit in Achslagern (AX1, AX2) gelagerten Rädern (RA1, RA2), wobei an zumindest einem Achslager (AX1, AX2) eines Rades (RA1, RA2) zumindest ein mit einer Auswerteeinheit (ASW) in Verbindung stehender Beschleunigungssensor (BS1, BS2) vorgesehen ist, **dadurch gekennzeichnet, dass,** die Auswerteeinheit (ASW) dazu eingerichtet ist, aus dem Abstand ($d_s$) der Schwellen (SWE) und einem von dem Beschleunigungssensor (BS1, BS2) erzeugten, den Schwellen zugeordnetem Beschleunigungssignal (SI1, SI2) die Fahrtgeschwindigkeit zu berechnen.

9. Vorrichtung nach Anspruch 8, **dadurch gekennzeichnet, dass** an zumindest zwei in Fahrtrichtung hintereinanderliegenden Achslagern (AX1, AX2) je zumindest ein Beschleunigungssensor (BSE) vorgesehen ist.

10. Vorrichtung nach Anspruch 8 oder 9, **dadurch gekennzeichnet, dass** die Auswerteeinheit (ASW) dazu eingerichtet ist, zur Berechnung der Fahrtgeschwindigkeit (V) eine für die befahrene Strecke charakteristische Schwellenfachschwingung bzw. Schwellenfachfrequenz ($\nu_{SF}$) zu ermitteln.

11. Vorrichtung nach Anspruch 10, **dadurch gekennzeichnet, dass** die Auswerteeinheit (ASW) dazu eingerichtet ist, eine Fouriertransformation von Signalwerten des zumindest einen Beschleunigungssignals (SI1, SI2) durchzuführen, die innerhalb eines vorgebbaren Zeitintervalls liegen und aus der Fouriertransformierten eine für eine befahrene Strecke charakteristische Schwellenfachschwingung bzw. Schwellenfachfrequenz ($\nu_{SF}$) zu ermitteln, die zumindest einem in Bezug auf die Fahrtrichtung vorderen und/oder hinteren Rad (RA1, RA2) zugeordnet ist.

12. Vorrichtung nach Anspruch 11, **dadurch gekennzeichnet, dass** die Auswerteeinheit (ASW) dazu eingerichtet ist, die Phasenlage der Schwellenfachschwingung zu ermitteln und die Phasendifferenz ($\Delta\varphi$) der einem vorderen und einem hinteren Rad (RA1, RA2) zugeordneten Schwellenfachschwingung $\Delta\varphi$ gebildet wird.

13. Vorrichtung nach Anspruch 12, **dadurch gekennzeichnet, dass** die Auswerteeinheit (ASW) dazu eingerichtet ist, aus der Phasendifferenz ($\Delta\varphi$) der Schwellenfachschwingung den Schwellenabstand

($d_s$) zu berechnen.

14. Vorrichtung nach Anspruch 13, **dadurch gekennzeichnet, dass** die Auswerteinheit (ASW) dazu eingerichtet ist, aus dem Schwellenabstand ($d_s$) und der Schwellenfachfrequenz ($v_{SF}$) die Fahrgeschwindigkeit (V) zu ermitteln.

15. Vorrichtung zur laufenden Bestimmung des Durchmessers (D) zumindest eines mit seiner Achse (AC1, AC2) in einer Achslagerung (AX1, AX2) gelagerten Rades (RA1, RA2) eines Schienenfahrzeuges, welches zur Fortbewegung auf Geleisen mit in Abstand ($d_s$) voneinander angeordneten Schwellen (SWE) oder äquivalenten Befestigungen vorgesehen ist, **dadurch gekennzeichnet, dass** sie eine Vorrichtung nach einem der Ansprüche 8 bis 14 umfasst, und an der Achse (AC1, AC2) des Rades (RA1, RA2) zumindest ein mit einer Auswerteinheit (AUS) in Verbindung stehender Drehfrequenzsensor (DFS) vorgesehen ist, wobei die Auswerteinheit dazu eingerichtet ist, den Durchmesser (D) des Rades (RA1, RA2) aus der Drehfrequenz ($v_{WELLE}$) der Achse (AC1, AC2) und der Fahrtgeschwindigkeit (V) des Schienenfahrzeuges zu berechnen.

**Claims**

1. Method of continuously determining the travel speed (V) of a rail vehicle which has wheels (RA1, RA2) mounted in axle bearings (AX1, AX2) and is provided for locomotion on sets of tracks having sleepers (SWE) or equivalent attachments disposed at a mutual spacing ($d_S$), **characterised in that** at least one acceleration signal (SI1, SI2) which is allocated to the sleepers (SWE) is generated on at least one axle bearing (AX1, AX2) and this acceleration signal and the spacing ($d_S$) between the sleepers (SWE) are used for calculating the travel speed.

2. Method as claimed in claim 1, **characterised in that** at least one acceleration signal (SI1, SI2) is generated in each case on at least two axle bearings (AX1, AX2) lying one behind the other in the direction of travel.

3. Method as claimed in claim 1 or 2, **characterised in that** a sleeper spacing oscillation or sleeper spacing frequency ($v_{SF}$) which is characteristic of the section of line travelled is determined for the purpose of calculating the travel speed (V).

4. Method as claimed in claim 3, **characterised in that** signal values of the at least one acceleration signal (SI1, SI2), which are within a specifiable time interval, are subjected to a Fourier transformation, and from the Fourier-transformed value of the signal values of the acceleration signal (SI1, SI2) it is possible to determine the sleeper spacing oscillation or sleeper spacing frequency ($v_{SF}$) which is characteristic of the section of line travelled and which is allocated to at least one front and/or rear wheel (RA1, RA2) in relation to the direction of travel.

5. Method as claimed in claim 4, **characterised in that** the phase position ($\varphi$) of the sleeper spacing oscillation is determined and the phase difference ($\Delta\varphi$) of the sleeper spacing oscillation allocated to a front or a rear wheel is formed.

6. Method as claimed in claim 5, **characterised in that** the sleeper spacing ($d_S$) is calculated from the phase difference ($\Delta\varphi$) of the sleeper spacing oscillation and the travel speed (V) is determined from the sleeper spacing ($d_S$) and the sleeper spacing frequency ($v_{SF}$).

7. Method of continuously determining the diameter of at least one rail vehicle wheel (RA1, RA2) which is mounted with its axle (AC1, AC2) in an axle bearing (AX1, AX2), said rail vehicle being provided for locomotion on sets of tracks having sleepers (SWE) or equivalent attachments disposed at a mutual spacing ($d_S$), **characterised in that** the diameter is calculated with the aid of a travel speed of the rail vehicle, as calculated according to any one of claims 1 to 6, and of the rotational frequency ($v_{WAVE}$) of the axle (AC1, AC2) of the wheel (RA1, RA2).

8. Device for continuously determining the travel speed (V) of a rail vehicle which has wheels (RA1, RA2) mounted in axle bearings (AX1, AX2) and is provided for locomotion on sets of tracks having sleepers (SWE) or equivalent attachments disposed at a mutual spacing ($d_S$), wherein at least one acceleration sensor (BS1, BS2) which is connected to an evaluating unit (ASW) is provided on at least one axle bearing (AX1, AX2) of a wheel (RA1, RA2), **characterised in that** the evaluating unit (ASW) is arranged to calculate the travel speed from the spacing ($d_S$) between the sleepers (SWE) and an acceleration signal (SI1, SI2) which is generated by the acceleration sensor (BS1, BS2) and is allocated to the sleepers.

9. Device as claimed in claim 8, **characterised in that** at least one acceleration sensor (BSE) is provided in each case on at least two axle bearings (AX1, AX2) which lie one behind the other in the direction of travel.

**10.** Device as claimed in claim 8 or 9, **characterised in that** in order to calculate the travel speed (V), the evaluating unit (ASW) is arranged to determine a sleeper spacing oscillation or sleeper spacing frequency ($v_{SF}$) which is characteristic of the section of line travelled.

**11.** Device as claimed in claim 10, **characterised in that** the evaluating unit (ASW) is arranged to perform a Fourier transformation of signal values of the at least one acceleration signal (SI1, SI2) which are within a specifiable time interval, and to determine from the Fourier-transformed value a sleeper spacing oscillation or sleeper spacing frequency ($v_{SF}$) which is characteristic of the section of line travelled and which is allocated to at least one front and/or rear wheel (RA1, RA2) in relation to the direction of travel.

**12.** Device as claimed in claim 11, **characterised in that** the evaluating unit (ASW) is arranged to determine the phase position of the sleeper spacing oscillation and the phase difference ($\Delta\varphi$) of the sleeper spacing oscillation $\Delta\varphi$ which is allocated to a front and a rear wheel (RA1, RA2) is formed.

**13.** Device as claimed in claim 12, **characterised in that** the evaluating unit (ASW) is arranged to calculate the sleeper spacing ($d_S$) from the phase difference ($\Delta\varphi$) of the sleeper spacing oscillation.

**14.** Device as claimed in claim 13, **characterised in that** the evaluating unit (ASW) is arranged to determine the travel speed (V) from the sleeper spacing ($d_S$) and the sleeper spacing frequency ($v_{SF}$).

**15.** Device for continuously determining the diameter (D) of at least one rail vehicle wheel (RA1, RA2) which is mounted with its axle (AC1, AC2) in an axle bearing (AX1, AX2), said rail vehicle being provided for locomotion on sets of tracks having sleepers (SWE) or equivalent attachments disposed at a mutual spacing ($d_S$), **characterised in that** it comprises a device as claimed in any one of claims 8 to 14, and at least one rotational frequency sensor (DFS) which is connected to an evaluating unit (AUS) is provided on the axle (AC1, AC2) of the wheel (RA1, RA2), wherein the evaluating unit is arranged to calculate the diameter (D) of the wheel (RA1, RA2) from the rotational frequency ($v_{WAVE}$) of the axle (AC1, AC2) and the travel speed (V) of the rail vehicle.

**Revendications**

**1.** Procédé pour déterminer en continu la vitesse de marche (V) d'un véhicule ferroviaire, ayant des roues (RA1, RA2) montées dans des boîtes d'essieu (AX1, AX2) et prévu pour se déplacer sur des voies ferrées ayant des traverses ou des fixations équivalentes disposées à un intervalle ($d_S$) les unes des autres, **caractérisé en ce que**, au niveau d'au moins une boîte d'essieu (AX1, AX2), est généré au moins un signal d'accélération (SI1, SI2) associé aux traverses (SWE) et **en ce que** la vitesse de marche est calculée à partir de ce signal et de l'intervalle ($d_S$) entre les traverses (SWE).

**2.** Procédé selon la revendication 1, **caractérisé en ce que**, au niveau de chacune des au moins deux boîtes d'essieu (AX1, AX2) placées l'une derrière l'autre dans le sens de la marche, est généré au moins un signal d'accélération (SI1, SI2).

**3.** Procédé selon la revendication 1 ou 2, **caractérisé en ce qu'**une oscillation de case entre traverses ou une fréquence de case entre traverses ($v_{SF}$) caractéristique du trajet parcouru est déterminée afin de calculer la vitesse de marche (V).

**4.** Procédé selon la revendication 3, **caractérisé en ce que** des valeurs de signaux d'au moins un signal d'accélération (SI1, SI2), qui sont situées à l'intérieur d'un intervalle de temps définissable à l'avance, sont soumises à une transformation de Fourier, et **en ce qu'**à partir de la transformée de Fourier des valeurs du signal d'accélération (SI1, SI2) est déterminée l'oscillation de case entre traverses ou la fréquence de case entre traverses ($v_{SF}$) qui est caractéristique d'un trajet parcouru et est associée à au moins une roue avant et/ou arrière (RA1, RA2) par rapport au sens de marche.

**5.** Procédé selon la revendication 4, **caractérisé en ce que** l'on détermine la position de phase ($\varphi$) de l'oscillation de case entre traverses et **en ce que** l'on forme la différence de phase ($\Delta\varphi$) de l'oscillation de case entre traverses associée à une roue avant et une roue arrière.

**6.** Procédé selon la revendication 5, **caractérisé en ce qu'**à partir de la différence de phase ($\Delta\varphi$) de l'oscillation de case entre traverses est calculé l'intervalle entre les traverses ($d_S$) et **en ce que** la vitesse de marche (V) est déterminée à partir de l'intervalle entre les traverses ($d_S$) et de la fréquence de case entre traverses ($v_{SF}$).

**7.** Procédé pour déterminer en continu le diamètre d'au moins une roue (RA1, RA2), placée avec son axe (AC1, AC2) dans une boîte d'essieu (AX1, AX2), d'un véhicule ferroviaire qui est prévu pour se déplacer sur des voies ferrées ayant des traverses (SWE) disposées à un intervalle ($d_S$) les unes des autres, **caractérisé en ce que** le diamètre est calculé à l'aide d'une vitesse de marche du véhicule ferroviaire calculée selon une des revendications 1 à 6 et à l'aide de la fréquence de rotation ($v_{WELLE}$) de l'axe (AC1, AC2) de la roue (RA1, RA2).

8.  Dispositif pour déterminer en continu la vitesse de marche (V) d'un véhicule ferroviaire, ayant des roues (RA1, RA2) montées sur des boîtes d'essieu (AX1, AX2) et prévu pour se déplacer sur des voies ferrées ayant des traverses ou des fixations équivalentes disposées à un intervalle ($d_S$) les unes des autres, dans lequel il est prévu, au niveau d'au moins une boîte d'essieu (AX1, AX2) d'une roue (RA1, RA2), au moins un capteur d'accélération (BS1, BS2) étant en liaison à un système d'analyse (ASW), **caractérisé en ce que** le système d'analyse (ASW) est conçu afin de calculer la vitesse de marche à partir de l'intervalle ($d_S$) des traverses (SWE) et d'un signal d'accélération (SI1, SI2) associé aux traverses et généré par un capteur d'accélération (BS1, BS2).

9.  Dispositif selon la revendication 8, **caractérisé en ce qu'**il est prévu au moins un capteur d'accélération (BSE) au niveau de chacune des au moins deux boîtes d'essieu (AX1, AX2) placées l'une derrière l'autre dans le sens de la marche.

10. Dispositif selon la revendication 8 ou 9, **caractérisé en ce que** le système d'analyse (ASW) est conçu afin de déterminer une oscillation ou une fréquence de case entre traverses ($v_{SF}$), caractéristique d'un trajet parcouru, dans le but de calculer la vitesse de marche (V).

11. Dispositif selon la revendication 10, **caractérisé en ce que** le système d'analyse (ASW) est conçu afin d'exécuter une transformation de Fourier de valeurs de signaux du au moins un signal d'accélération (SI1, SI2) qui sont situés à l'intérieur d'un intervalle de temps définissable à l'avance et afin de déterminer à partir de la transformée de Fourier une oscillation de case entre traverses ou une fréquence de case entre traverses ($v_{SF}$) qui est caractéristique d'un trajet parcouru et associée à au moins une roue avant et/ou arrière (RA1, RA2) par rapport au sens de marche.

12. Dispositif selon la revendication 11, **caractérisé en ce que** le système d'analyse (AW) est conçu afin de déterminer la position de phase ($\varphi$) de l'oscillation de case entre traverses et afin de former la différence de phase ($\Delta\varphi$) de l'oscillation de case entre traverses associée à une roue avant et une roue arrière (RA1, RA2).

13. Dispositif selon la revendication 12, **caractérisé en ce que** le système d'analyse (ASW) est conçu afin de calculer l'intervalle entre les traverses ($d_S$) à partir de la différence de phase ($\Delta\varphi$) de l'oscillation de case entre traverses.

14. Dispositif selon la revendication 13, **caractérisé en ce que** le système d'analyse (ASW) est conçu afin de déterminer la vitesse de marche (V) à partir de l'intervalle entre les traverses ($d_S$) et de la fréquence de case entre traverses ($v_{SF}$).

15. Dispositif pour déterminer en continu le diamètre d'au moins une roue (RA1, RA2), placée avec son axe (AC1, AC2) dans une boîte d'essieu (AX1, AX2), d'un véhicule ferroviaire qui est prévu pour se déplacer sur des voies ferrées ayant des traverses (SWE) disposées à un intervalle ($d_S$) les unes des autres, **caractérisé en ce qu'**il comporte un dispositif conforme à l'une quelconque des revendications 8 à 14, et **en ce qu'**il est prévu au niveau de l'axe (AC1, AC2) de la roue (RA1, RA2) au moins un capteur de fréquence de rotation (DFS) étant en liaison avec un système d'analyse (ASW), le système d'analyse étant conçu afin de calculer le diamètre (D) de la roue (RA1, RA2) à partir de la fréquence de rotation ($v_{WELLE}$) de l'axe (AC1, AC2) et de la vitesse de marche (V) du véhicule ferroviaire.

Fig. 1

Fig. 2

Fig. 3

Fig. 4

Fig. 5